# EUROPEAN PATENT APPLICATION

(11) **EP 4 556 096 A1**
(43) Date of publication of application: **21.05.2025**
(21) Application number: 22951176.1
(22) Date of filing: 15.07.2022
(51) Int. Cl.: B01D 53/02, B01D 53/04, F24F 3/12

(54) **CARBON DIOXIDE RECOVERY SYSTEM**

(71) Applicant: MITSUBISHI ELECTRIC CORPORATION, Chiyoda-ku Tokyo 100-8310 (JP)
(72) Inventor: ONAKA, Yoji, Tokyo 100-8310 (JP); TANISHIMA, Makoto, Tokyo 100-8310 (JP); SHINOKI, Toshio, Tokyo 100-8310 (JP); KAWAMOTO, Makoto, Tokyo 100-8310 (JP); NAKASHIMA, Seiji, Tokyo 100-8310 (JP); FUKUI, Tomoya, Tokyo 100-8310 (JP); INOUE, Takumi, Tokyo 100-8310 (JP)
(74) Representative: Meissner Bolte Partnerschaft mbB
(86) International application number: PCT/JP2022/027805
(87) International publication number: WO 2024/013967

(57) **Abstract**

A carbon dioxide recovery system of the present invention includes an outdoor unit of a first heat pump device, the outdoor unit including a heat exchanger and a first blower, a recovery unit that has an adsorbent onto which carbon dioxide is adsorbable and is configured to recover carbon dioxide from air, and a separation unit configured to separate the carbon dioxide from the adsorbent moved from the recovery unit, in which the first blower sends out an airflow heated by the heat exchanger toward the separation unit in a case where the first heat pump device performs a cooling operation.

## Description

### Technical Field

The present invention relates to a carbon dioxide recovery system.

### Background Art

Patent Document 1 discloses a device that removes carbon dioxide from the air using an adsorbent capable of adsorbing carbon dioxide.

### Citation List

### Patent Documents

Patent Document 1: Japanese Unexamined Patent Application, First Publication JP 2020- 131 166 A

### Summary of the Invention

### Problem to be Solved by the Invention

There is a demand for improving an efficiency of carbon dioxide recovery using an adsorbent. In a configuration of Patent Document 1, a decompression pump is used to separate carbon dioxide from the adsorbent, which results in an increase in energy required for the separation.

In view of the above circumstances, an object of the present disclosure is to provide a carbon dioxide recovery system capable of improving an efficiency of carbon dioxide recovery.

### Means to Solve the Problem

An aspect of a carbon dioxide recovery system according to the present invention includes an outdoor unit of a first heat pump device, the outdoor unit including a heat exchanger and a first blower, a recovery unit that has an adsorbent onto which carbon dioxide is adsorbable and is configured to recover carbon dioxide from air, and a separation unit configured to separate the carbon dioxide from the adsorbent moved from the recovery unit, in which the first blower sends out an airflow heated by the heat exchanger toward the separation unit in a case where the first heat pump device performs a cooling operation.

### Effects of the Invention

According to the present invention, it is possible to provide a carbon dioxide recovery system capable of improving an efficiency of carbon dioxide recovery.

### Brief Description of the Drawings

FIG. 1 A schematic view of a carbon dioxide recovery system according to a first embodiment.
FIG. 2 A schematic view of a carbon dioxide recovery system according to a second embodiment.
FIG. 3 A schematic view of a carbon dioxide recovery system according to a third embodiment.
FIG. 4 A schematic view of a carbon dioxide recovery system according to a fourth embodiment.
FIG. 5 A schematic view of a carbon dioxide recovery system according to a fifth embodiment.
FIG. 6 A schematic view of a carbon dioxide recovery system according to a sixth embodiment.
FIG. 7 A schematic view of a carbon dioxide recovery system according to a seventh embodiment.
FIG. 8 A schematic view of a carbon dioxide recovery system according to an eighth embodiment.
FIG. 9 A schematic view of a carbon dioxide recovery system according to a ninth embodiment.
FIG. 10 A schematic view of a carbon dioxide recovery system according to a tenth embodiment.
FIG. 11 A schematic view of a carbon dioxide recovery system according to an eleventh embodiment.
FIG. 12A An example of a T-s diagram of a general vapor compression type heat pump cycle.
FIG. 12B A schematic view of a heat pump cycle.
FIG. 13 An example of a T-s diagram of a transcritical heat pump cycle.
FIG. 14 An example of a T-s diagram of a heat pump cycle using a non-azeotropic mixed refrigerant.
FIG. 15 A schematic view of a carbon dioxide recovery system according to a twelfth embodiment.
FIG. 16 A schematic view of a vortex tube according to the twelfth embodiment.

### Description of Embodiments

Hereinafter, an embodiment of the present invention will be described with reference to the drawings. The scope of the present invention is not limited to the following embodiment, and can be changed in any way within the scope of technical ideas of the present invention.

### First Embodiment.

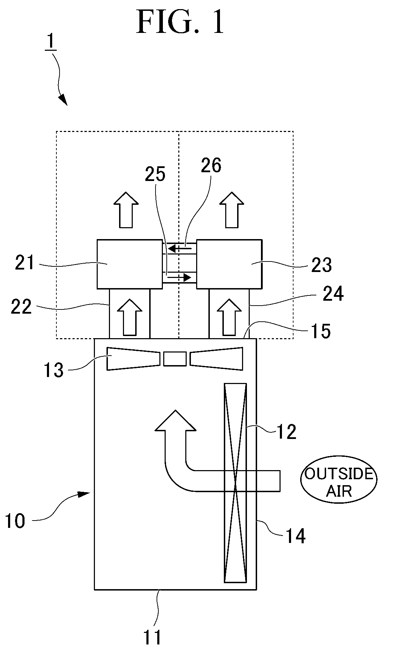

FIG. 1 is a schematic view of a carbon dioxide recovery system 1 according to a first embodiment.

As shown in FIG. 1, the carbon dioxide recovery system 1 includes an outdoor unit 10, a recovery unit 21, and a separation unit 23.

The outdoor unit 10 is a part of a first heat pump device and is used together with an indoor unit (not shown). In the present embodiment, the first heat pump device is an air conditioner having at least a function of cooling an indoor space. The outdoor unit 10 and the indoor unit are connected by a pipe (not shown) or the like for circulating a refrigerant.

The outdoor unit 10 includes a housing 11, a heat exchanger 12, and a first blower 13. In addition, the outdoor unit 10 includes a compressor (not shown) and the like.

A suction port 14 and a blowout port 15 are formed in the housing 11. The heat exchanger 12 and the first blower 13 are disposed inside the housing 11. The heat exchanger 12 causes heat exchange between the refrigerant and an outside air (air). The first blower 13 blows air from an inside of the outdoor unit 10 toward an outside.

When the first blower 13 is driven, air is suctioned into the housing 11 from the suction port 14. The air suctioned into the housing 11 passes through the heat exchanger 12 and is blown out from the blowout port 15 to the outside of the housing 11.

Hereinafter, an upstream side in a flow direction of an airflow generated by the first blower 13 is simply referred to as an upstream side, and a downstream side in the flow direction of the airflow generated by the first blower 13 is simply referred to as a downstream side.

The recovery unit 21 has a function of recovering carbon dioxide from the air. The recovery unit 21 is disposed downstream of the first blower 13. A first duct 22 that conveys the airflow from the first blower 13 to the recovery unit 21 is provided between the first blower 13 and the recovery unit 21.

The recovery unit 21 has an adsorbent. The adsorbent includes a material capable of adsorbing carbon dioxide. Examples of the material capable of adsorbing carbon dioxide include amine, zeolite, silica gel, diatomaceous earth, alumina, and activated carbon. A plurality of materials may be selected from among the above, or materials other than the above may be selected. The adsorbent may be granular (for example, bead-shaped (spherical) or pellet-shaped (cylindrical)). Alternatively, a powdery adsorbent may be adopted. In this case, the powdery adsorbent may be carried on a surface of a base material. The base material may have, for example, a honeycomb shape. For example, the powdered adsorbent may be carried on a honeycomb rotor. The adsorbent may be a liquid adsorbent.

The recovery unit 21 is configured to hold the adsorbent at a position where the airflow generated by the first blower 13 is received.

For example, the recovery unit 21 may have a container that can accommodate the adsorbent and has air permeability. In this case, the container is disposed at the position where the airflow generated by the first blower 13 is received.

Alternatively, for example, in a case where the adsorbent is carried on the honeycomb rotor, the recovery unit 21 may have a support portion that supports the honeycomb rotor at the position where the airflow generated by the first blower 13 is received.

The airflow blown out from the blowout port 15 by driving of the first blower 13 reaches the adsorbent held in the recovery unit 21. As a result, air enters the adsorbent or air inside the adsorbent is discharged. The recovery unit 21 brings the airflow generated by the first blower 13 into contact with the adsorbent so that carbon dioxide is adsorbed onto the adsorbent. That is, in the present embodiment, the recovery unit 21 uses blowing power of the first blower 13 to recover carbon dioxide.

The separation unit 23 has a function of separating carbon dioxide from the adsorbent that has adsorbed carbon dioxide. The separation unit 23 is disposed downstream of the first blower 13. A second duct 24 that conveys an airflow from the first blower 13 to the separation unit 23 is provided between the first blower 13 and the separation unit 23. The separation unit 23 is configured to hold the adsorbent at a position where the airflow generated by the first blower 13 is received.

The adsorbent that has adsorbed carbon dioxide in the recovery unit 21 is moved to the separation unit 23. In addition, the adsorbent from which the carbon dioxide has been separated in the separation unit 23 is moved to the recovery unit 21 again.

As shown in FIG. 1, the adsorbent may be transported (moved) from the recovery unit 21 to the separation unit 23 via a first pipe 25, and may be transported (moved) from the separation unit 23 to the recovery unit 21 via a second pipe 26.

Alternatively, for example, in the case where the adsorbent is carried on the honeycomb rotor, the honeycomb rotor is disposed across the recovery unit 21 and the separation unit 23, and the adsorbent may be moved between the recovery unit 21 and the separation unit 23 by rotation of the honeycomb rotor.

The airflow blown out from the blowout port 15 by the driving of the first blower 13 reaches the adsorbent held in the separation unit 23. Here, in a case where the first heat pump device performs a cooling operation, the air suctioned into the housing 11 from the suction port 14 is heated by the heat exchanger 12 to, for example, 45 °C to 70 °C. The first blower 13 sends out the airflow heated by the heat exchanger 12 toward the separation unit 23. Therefore, the airflow heated by the heat exchanger 12 reaches the adsorbent held in the separation unit 23. The separation unit 23 brings the heated airflow sent out from the first blower 13 into contact with the adsorbent to heat the adsorbent so that carbon dioxide is separated from the adsorbent. In the present embodiment, the separation unit 23 uses the blowing power of the first blower 13 to separate carbon dioxide.

As described above, the carbon dioxide recovery system 1 according to the present embodiment includes the outdoor unit 10 of the first heat pump device, the outdoor unit 10 including the heat exchanger 12 and the first blower 13, the recovery unit 21 that has an adsorbent capable of adsorbing carbon dioxide and recovers the carbon dioxide from the air, and the separation unit 23 that separates the carbon dioxide from the adsorbent moved from the recovery unit 21. The first blower 13 sends out the airflow heated by the heat exchanger 12 toward the separation unit 23 in a case where the first heat pump device performs the cooling operation.

The air heated by the heat exchanger 12 is supplied to the separation unit 23 using the blowing power of the first blower 13. The separation unit 23 uses heat of the air heated by the heat exchanger 12 as at least a portion of a heat source for the separation of carbon dioxide. Therefore, carbon dioxide can be separated with reduced energy consumption and cost, and an efficiency of carbon dioxide recovery is improved.

In addition, the first blower 13 sends out the airflow that has passed through the heat exchanger 12 toward both the recovery unit 21 and the separation unit 23.

As a result, carbon dioxide can be recovered and separated by using the blowing power of the first blower 13, thereby further reducing energy consumption.

### Second Embodiment.

Next, a carbon dioxide recovery system 1 according to a second embodiment will be described. Since a basic configuration of the carbon dioxide recovery system 1 according to the present embodiment is the same as that of the first embodiment, descriptions will focus on differences.

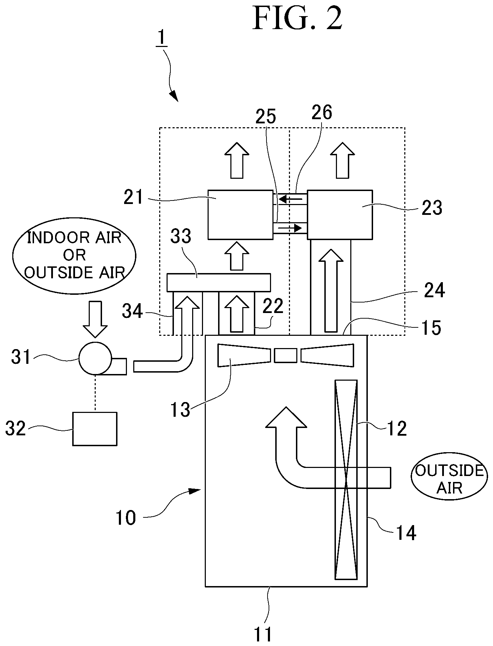

FIG. 2 is a schematic view of the carbon dioxide recovery system 1 according to the second embodiment.

As shown in FIG. 2, in the present embodiment, the carbon dioxide recovery system 1 further includes a second blower 31, a control unit 32, and a junction portion 33.

The second blower 31 supplies outside air or indoor air that has not passed through the heat exchanger 12 to the recovery unit 21 via the junction portion 33. A third duct 34 that conveys an airflow from the second blower 31 to the junction portion 33 is provided between the second blower 31 and the junction portion 33.

The junction portion 33 is disposed between the first blower 13 and the recovery unit 21. In the present embodiment, the first duct 22 is provided between the first blower 13 and the junction portion 33, and conveys the airflow from the first blower 13 to the junction portion 33. The junction portion 33 mixes the air that has passed through the heat exchanger 12 from the first blower 13 with the outside air or indoor air that has not passed through the heat exchanger 12 from the second blower 31, and supplies the mixed air to the recovery unit 21. In a case where the first heat pump device performs the cooling operation, the airflow by the first blower 13 is mixed with the outside air or indoor air sent out by the second blower 31 to be decreased in temperature, and then is supplied to the recovery unit 21. A temperature sensor (not shown) that measures the temperature of the mixed air is provided in the junction portion 33.

In the present embodiment, the airflow of the mixed air, which is a mixture of the air from the first blower 13 and the outside air or indoor air from the second blower 31, reaches the adsorbent held in the recovery unit 21. The airflow of the mixed air and the adsorbent are brought into contact with each other so that carbon dioxide is adsorbed onto the adsorbent. That is, in the present embodiment, the recovery unit 21 uses the blowing power of the first blower 13 and the second blower 31 to recover carbon dioxide.

The control unit 32 controls each component of the carbon dioxide recovery system 1. In the present embodiment, the control unit 32 controls a flow rate of the air supplied from the second blower 31 to the junction portion 33 based on measurement results of the temperature sensor provided in the junction portion 33. For example, the control unit 32 may control the flow rate of the air from the second blower 31 by controlling an opening degree of a flow control valve provided in the third duct 34. The control unit 32 may control the flow rate of the air from the second blower 31 by controlling a rotation speed of the second blower 31.

As described above, the carbon dioxide recovery system 1 according to the present embodiment further includes the second blower 31 that supplies the outside air or indoor air that has not passed through the heat exchanger 12 to the recovery unit 21.

As a result, the outside air or indoor air from the second blower 31 can be used for the recovery of carbon dioxide in the recovery unit 21. In addition, when a temperature of the air in contact with the adsorbent is high, there are cases where an efficiency of carbon dioxide adsorption by the adsorbent is reduced. By supplying the outside air or indoor air that has not passed through the heat exchanger 12 to the recovery unit 21, it is possible to suppress a decrease in the adsorption efficiency. Therefore, the efficiency of carbon dioxide recovery is improved.

A carbon dioxide concentration in the indoor air often increases due to human respiration. In a case where the indoor air is supplied to the recovery unit 21 by the second blower 31, carbon dioxide can be recovered from the air having a high carbon dioxide concentration, so that the efficiency of carbon dioxide recovery is further improved.

In addition, in a case where the air that has passed through the heat exchanger 12 from the first blower 13 and the outside air or indoor air that has not passed through the heat exchanger 12 from the second blower 31 are mixed, the temperature of the air supplied to the recovery unit 21 can be decreased compared to a case where only the air from the first blower 13 is supplied to the recovery unit 21. The control unit 32 controls the flow rate of the air supplied from the second blower 31 to the junction portion 33 based on the measurement results of the temperature sensor that measures the temperature of the mixed air, whereby the temperature of the air in contact with the adsorbent can be more reliably adjusted to a temperature suitable for the adsorption of carbon dioxide.

### Third Embodiment.

Next, a carbon dioxide recovery system 1 according to a third embodiment will be described. Since a basic configuration of the carbon dioxide recovery system 1 according to the present embodiment is the same as that of the first embodiment, descriptions will focus on differences.

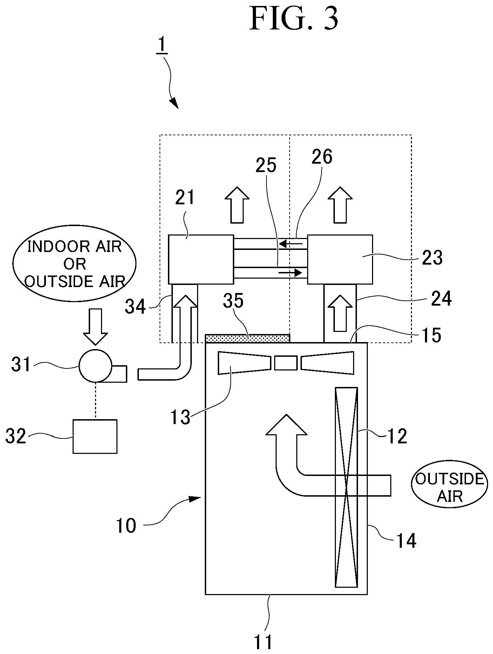

FIG. 3 is a schematic view of the carbon dioxide recovery system 1 according to the third embodiment.

As shown in FIG. 3, in the present embodiment, the carbon dioxide recovery system 1 further includes a restricting unit 35.

The restricting unit 35 is provided between the first blower 13 and the recovery unit 21. The restricting unit 35 restricts the airflow generated by the first blower 13 from reaching the recovery unit 21. The restricting unit 35 is, for example, a plate-shaped member that blocks the airflow from the first blower 13 toward the recovery unit 21.

In the present embodiment, only the air from the second blower 31 is supplied to the adsorbent held in the recovery unit 21. The airflow generated by the second blower 31 is brought into contact with the adsorbent so that carbon dioxide is adsorbed the adsorbent. That is, in the present embodiment, the recovery unit 21 uses the blowing power of the second blower 31 to recover carbon dioxide.

As described above, the carbon dioxide recovery system 1 according to the present embodiment further includes the restricting unit 35 that is provided between the first blower 13 and the recovery unit 21, and that restricts the airflow heated by the heat exchanger 12 from reaching the recovery unit 21.

As a result, the recovery unit 21 is not supplied with the air heated by the heat exchanger 12, and is supplied with only the outside air or indoor air that has not passed through the heat exchanger 12 from the second blower 31. Therefore, it is possible to prevent a decrease in the efficiency of carbon dioxide adsorption by the adsorbent due to an increase in the temperature of the air supplied to the recovery unit 21. In addition, since the air heated by the heat exchanger 12 is supplied only to the separation unit 23, an amount of the air supplied to the separation unit 23 can be increased. Therefore, the efficiency of carbon dioxide recovery is improved.

### Fourth Embodiment.

Next, a carbon dioxide recovery system 1 according to a fourth embodiment will be described. Since a basic configuration of the carbon dioxide recovery system 1 according to the present embodiment is the same as that of the first embodiment, descriptions will focus on differences.

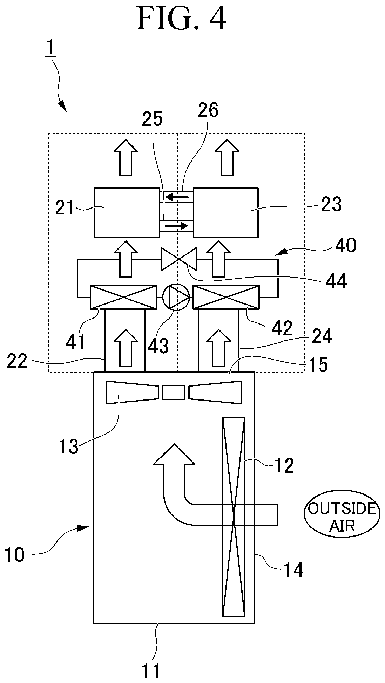

FIG. 4 is a schematic view of the carbon dioxide recovery system 1 according to the fourth embodiment.

As shown in FIG. 4, in the present embodiment, the carbon dioxide recovery system 1 further includes a second heat pump device 40.

The second heat pump device 40 is provided between the first blower 13, and the recovery unit 21 and the separation unit 23. The second heat pump device 40 includes an evaporator 41, a condenser 42, a compressor 43, and an expansion valve 44.

In the second heat pump device 40, a refrigerant circulates between the evaporator 41 and the condenser 42. Specifically, the refrigerant in a gaseous state compressed by the compressor 43 flows into the condenser 42. The refrigerant in the condenser 42 exchanges heat with a surrounding air, thereby heating the surrounding air. The refrigerant that has entered a liquid state due to the heat exchange is expanded by the expansion valve 44 and flows into the evaporator 41. The refrigerant in the evaporator 41 exchanges heat with the surrounding air, thereby cooling the surrounding air. The refrigerant that has entered the gaseous state due to the heat exchange is returned to the compressor 43.

The evaporator 41 is located between the first blower 13 and the recovery unit 21. In the present embodiment, the first duct 22 is provided between the first blower 13 and the evaporator 41, and conveys the airflow from the first blower 13 to the evaporator 41. The air from the first blower 13 is cooled by passing through the evaporator 41 and is supplied to the recovery unit 21. In addition, the air from the first blower 13 is dehumidified by passing through the evaporator 41.

The condenser 42 is located between the first blower 13 and the separation unit 23. In the present embodiment, the second duct 24 is provided between the first blower 13 and the condenser 42, and conveys the airflow from the first blower 13 to the condenser 42. The air from the first blower 13 is heated by passing through the condenser 42 and is supplied to the separation unit 23.

As described above, the carbon dioxide recovery system 1 according to the present embodiment further includes the second heat pump device 40 including the evaporator 41 and the condenser 42. The evaporator 41 is located between the first blower 13 and the recovery unit 21, and the condenser 42 is located between the first blower 13 and the separation unit 23.

By cooling the air from the first blower 13 using the evaporator 41, the temperature of the air supplied to the recovery unit 21 can be adjusted to a temperature suitable for the adsorption of carbon dioxide by the adsorbent. By heating the air from the first blower 13 using the condenser 42, the temperature of the air supplied to the separation unit 23 can be adjusted to a temperature suitable for the separation of carbon dioxide from the adsorbent. Therefore, the efficiency of carbon dioxide recovery can be improved. In addition, when a humidity of the air in contact with the adsorbent is high, there is a probability that the efficiency of carbon dioxide adsorption by the adsorbent is reduced. The evaporator 41 dehumidifies the air supplied to the recovery unit 21, thereby preventing a decrease in the adsorption efficiency.

The temperature suitable for the adsorption of carbon dioxide by the adsorbent is, for example, 5 °C to 30 °C, and the temperature suitable for the separation of carbon dioxide from the adsorbent is, for example, 60 °C to 120 °C. The present invention is not limited thereto, and the suitable temperature varies depending on a specific material of the adsorbent.

Here, in a case where the first heat pump device is an air conditioner having a function of cooling and heating an indoor space, the first heat pump device performs the cooling operation and the heating operation according to the season, temperature, and the like.

In a case where the first heat pump device performs the heating operation, the first blower 13 supplies the airflow cooled by the heat exchanger 12 to the recovery unit 21 by passing the airflow through the evaporator 41 and supplies the airflow to the separation unit 23 by passing the airflow through the condenser 42.

The airflow cooled by the heat exchanger 12 can be heated by the condenser 42 and supplied to the separation unit 23. Therefore, the carbon dioxide can be recovered and separated even in a case where the first heat pump device performs the heating operation.

In addition, in the present embodiment, the second heat pump device 40 may operate in a transcritical heat pump cycle in which the refrigerant operates at a pressure higher than a critical pressure. A working fluid used in the transcritical heat pump cycle is a refrigerant primarily containing a carbon dioxide refrigerant. Examples of the working fluid used in the transcritical heat pump cycle include the carbon dioxide refrigerant and a mixed refrigerant using the carbon dioxide refrigerant.

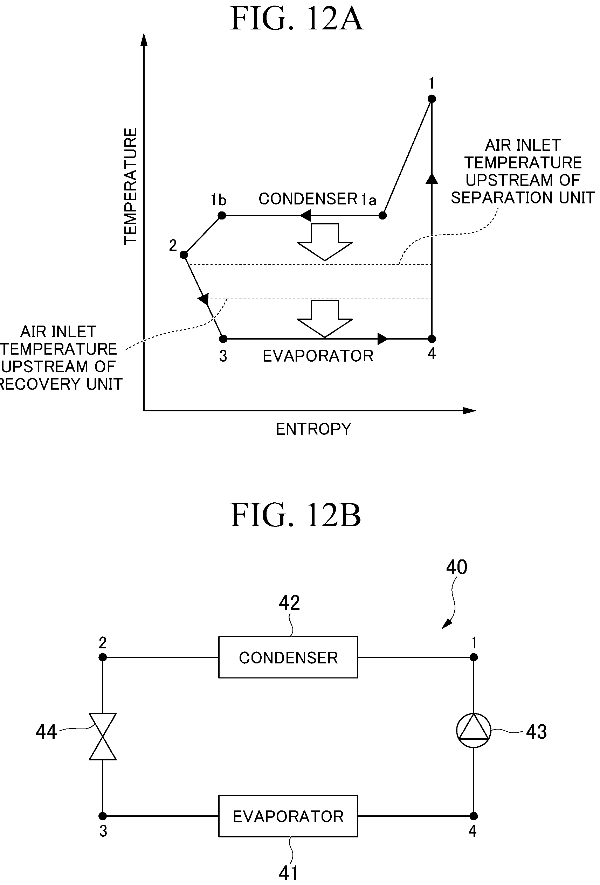

First, a general vapor compression type heat pump cycle in which a refrigerant operates at a pressure lower than a critical pressure will be described with reference to FIG. 12A. FIG. 12A is an example of a T-s diagram of the general vapor compression type heat pump cycle. FIG. 12B is a schematic view of a heat pump cycle. In FIG. 12A, a vertical axis represents a temperature, and a horizontal axis represents an entropy. As shown in FIG. 12A, in the general vapor compression type heat pump cycle, the refrigerant flowing through an inside of the condenser 42 has a gas single-phase region (region from state 1 to state 1a), a gas-liquid two-phase region (region from state 1a to state 1b), and a liquid single-phase region (region from state 1b to state 2). The gas-liquid two-phase region (the region from state 1a to state 1b) is a latent heat region, and in this region, a gas refrigerant liquefies without a temperature change. When the air upstream of the separation unit is heated by the condenser 42, it is preferable that a difference in temperature between the refrigerant and the air is large during a process from state 1 to state 2. However, in the general vapor compression type heat pump cycle, since a proportion of the gas-liquid two-phase region (the region from state 1a to state 1b), which is a latent heat region, in a region from state 1 to state 2 is large, it is difficult to create the difference in temperature between the refrigerant and the air.

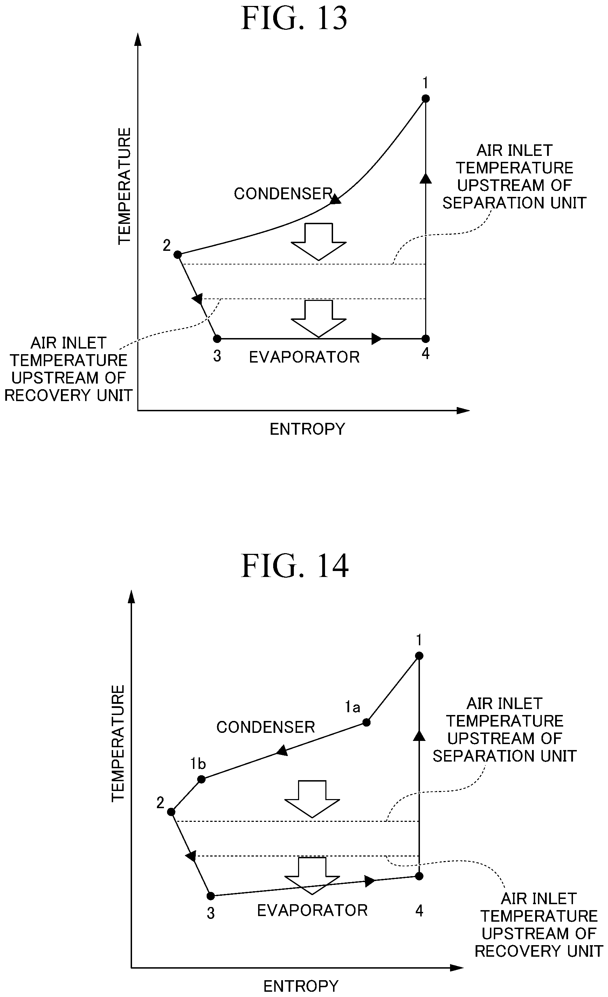

FIG. 13 is an example of a T-s diagram of the transcritical heat pump cycle. In FIG. 13, a vertical axis represents a temperature, and a horizontal axis represents an entropy. As shown in FIG. 13, in the transcritical heat pump cycle, the refrigerant flowing through the inside of the condenser 42 becomes a refrigerant in a supercritical state. Since a specific heat of the refrigerant in the supercritical state changes, the refrigerant does not have a latent heat region, and the temperature of the refrigerant changes throughout the entire process from state 1 to state 2. Therefore, it is easy to create a difference in temperature between the refrigerant and the air, and it is possible to reduce energy loss. In addition, since the temperature of the refrigerant is likely to change, the temperature of the refrigerant can be easily increased.

Therefore, in the case where the second heat pump device 40 operates in the transcritical heat pump cycle, the air from the first blower 13 can be efficiently heated by the condenser 42. Therefore, the temperature of the air supplied to the separation unit 23 can be increased, and the efficiency of carbon dioxide recovery can be improved.

Alternatively, the second heat pump device 40 may use a non-azeotropic mixed refrigerant having different boiling points as the working fluid. For example, as the mixed refrigerant, a mixture of carbon dioxide as a primary component and other refrigerant (propane, chlorofluorocarbon, or the like) having a different boiling point from that of the carbon dioxide may be used.

FIG. 14 is an example of a T-s diagram of a heat pump cycle using the non-azeotropic mixed refrigerant. In FIG. 14, a vertical axis represents a temperature, and a horizontal axis represents an entropy. In the heat pump cycle using the non-azeotropic mixed refrigerant, since the mixed refrigerant has different boiling points, the refrigerant flowing through the inside of the condenser 42 has a latent heat region (region from state 1a to state 1b) with a temperature change. Since the temperature of the refrigerant also changes in the latent heat region, it is easy to create a difference in temperature between the refrigerant and the air, and it is easy to increase the temperature of the refrigerant.

Therefore, when the second heat pump device 40 uses the non-azeotropic mixed refrigerant with different boiling points as the working fluid, the air from the first blower 13 can be efficiently heated by the condenser 42. Therefore, the temperature of the air supplied to the separation unit 23 can be increased, and the efficiency of carbon dioxide recovery can be improved. In addition, since an internal pressure of the second heat pump device 40 can be lowered compared to a case where a single refrigerant is used as the working fluid, a pressure-resistant strength design of the device can be relaxed.

### Fifth Embodiment.

Next, a carbon dioxide recovery system 1 according to a fifth embodiment will be described. Since a basic configuration of the carbon dioxide recovery system 1 according to the present embodiment is the same as those of the first to fourth embodiments, descriptions will focus on differences.

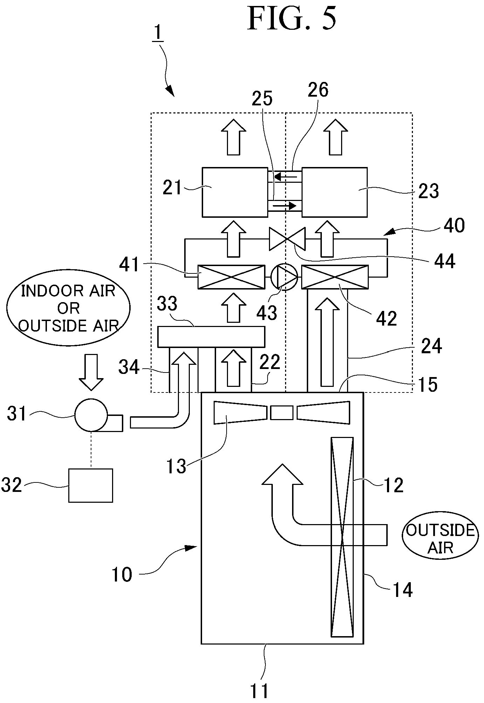

FIG. 5 is a schematic view of the carbon dioxide recovery system 1 according to the fifth embodiment.

The present embodiment is a combination of the second embodiment and the fourth embodiment. That is, the carbon dioxide recovery system 1 according to the embodiment includes the outdoor unit 10, the recovery unit 21, the separation unit 23, the second blower 31, the control unit 32, the junction portion 33, and the second heat pump device 40.

In the present embodiment, the junction portion 33 is disposed between the first blower 13 and the evaporator 41. The first duct 22 is provided between the first blower 13 and the junction portion 33, and conveys the airflow from the first blower 13 toward the evaporator 41. The junction portion 33 mixes the air that has passed through the heat exchanger 12 from the first blower 13 with the outside air or indoor air that has not passed through the heat exchanger 12 from the second blower 31, and sends out the mixed air toward the evaporator 41. The mixed air is cooled by passing through the evaporator 41 and is supplied to the recovery unit 21.

In addition, in the present embodiment, a temperature sensor is provided immediately before the recovery unit 21 and measures the temperature of the air immediately before being supplied to the recovery unit 21 (that is, the air after passing through the evaporator 41). The control unit 32 controls the flow rate of the air supplied from the second blower 31 to the junction portion 33 based on the measurement results of the temperature sensor.

As described above, in the present embodiment, the second blower 31 supplies the outside air or indoor air that has not passed through the heat exchanger 12 to the recovery unit 21 by passing the outside air or indoor air through the evaporator 41.

As a result, the outside air or indoor air from the second blower 31 can be used for the recovery of carbon dioxide in the recovery unit 21. In addition, the outside air or indoor air from the second blower 31 can be cooled and dehumidified by the evaporator 41 and be supplied to the recovery unit 21. Therefore, the efficiency of carbon dioxide recovery is improved.

In addition, in the carbon dioxide recovery system 1 according to the embodiment, in a case where the first heat pump device performs the heating operation, the airflow by the first blower 13 is mixed with the outside air or indoor air sent out by the second blower 31 to be increased in temperature, and is supplied to the recovery unit 21.

In a case where the first heat pump device performs the heating operation, the airflow by the first blower 13 is cooled by the heat exchanger 12. However, when the temperature of the air supplied to the recovery unit 21 is too low, there are cases where the efficiency of carbon dioxide adsorption is reduced. The airflow by the first blower 13 is mixed with the outside air or indoor air sent out by the second blower 31 to be increased in temperature, and is supplied to the recovery unit 21. As a result, it is possible to prevent a decrease in the efficiency of carbon dioxide adsorption.

In a case where the first heat pump device performs the heating operation, a temperature of the indoor air is higher than a temperature of the outside air. In a case where the airflow by the first blower 13 is mixed with the indoor air sent out by the second blower 31, the temperature of the airflow by the first blower 13 can be more effectively increased.

### Sixth Embodiment.

Hereinafter, a carbon dioxide recovery system 1 according to a sixth embodiment will be described. Since a basic configuration of the carbon dioxide recovery system 1 according to the present embodiment is the same as that of the fifth embodiment, descriptions will focus on differences.

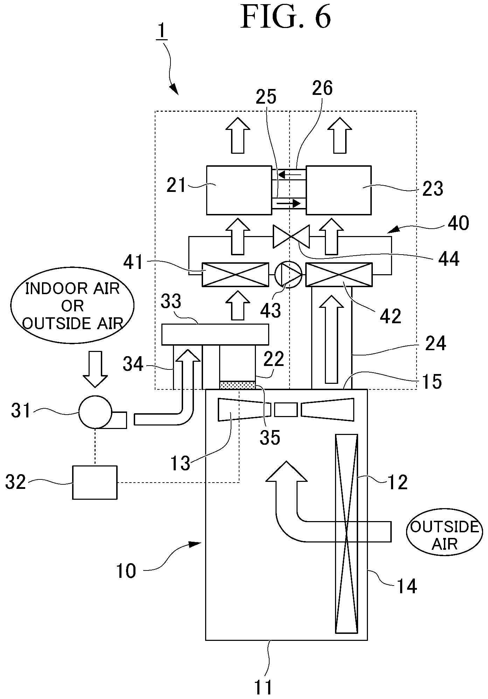

FIG. 6 is a schematic view of the carbon dioxide recovery system 1 according to the sixth embodiment.

In the present embodiment, the carbon dioxide recovery system 1 further includes the restricting unit 35.

In the present embodiment, the restricting unit 35 is provided in the first duct 22 or the second duct 24. The restricting unit 35 restricts at least a portion of the airflow generated by the first blower 13 from reaching the evaporator 41 or the condenser 42.

For example, the restricting unit 35 may be a plate-shaped member that is provided in the first duct 22 or the second duct 24 and blocks the airflow from the first blower 13 toward the evaporator 41 or the condenser 42. The restricting unit 35 may be movable between the first duct 22 and the second duct 24. In this case, a flow passage opening rate of the first duct 22 or the second duct 24 by the restricting unit 35 is changed by changing a position of the restricting unit 35 with respect to the first duct 22 or the second duct 24.

The restricting unit 35 may be a flow control valve provided in each of the first duct 22 and the second duct 24. In this case, the flow passage opening rate of the first duct 22 by the restricting unit 35 is changed by changing an opening degree of the flow control valve provided in the first duct 22, and the flow passage opening rate of the second duct 24 by the restricting unit 35 is changed by changing an opening degree of the flow control valve provided in the second duct 24.

The control unit 32 controls the flow passage opening rates of the first duct 22 and the second duct 24 by the restricting unit 35 according to an operation mode of the first heat pump device and the like.

For example, in a case where the first heat pump device performs a cooling operation, the control unit 32 controls the restricting unit 35 such that the flow passage opening rate of the first duct 22 is 0 % and the flow passage opening rate of the second duct 24 is 100 %. For example, in a case where the restricting unit 35 is a plate-shaped member, as shown in FIG. 6, the control unit 32 moves the restricting unit 35 to the first duct 22. In a case where the restricting unit 35 is a flow control valve, the control unit 32 sets the opening degree of the flow control valve provided in the first duct 22 to 0 % and sets the opening degree of the flow control valve provided in the second duct 24 to 100 %. As a result, the airflow heated by the heat exchanger 12 is restricted from reaching the evaporator 41 (that is, from being supplied to the recovery unit 21). Therefore, it is possible to prevent a decrease in the efficiency of carbon dioxide adsorption by the adsorbent due to an increase in the temperature of the air supplied to the recovery unit 21.

In a case where the first heat pump device performs the heating operation, the control unit 32 controls the restricting unit 35 such that the flow passage opening rate of the first duct 22 is 100 % and the flow passage opening rate of the second duct 24 is 0 %. For example, in a case where the restricting unit 35 is a plate-shaped member, the control unit 32 moves the restricting unit 35 to the second duct 24. In a case where the restricting unit 35 is a flow control valve, the control unit 32 sets the opening degree of the flow control valve provided in the first duct 22 to 100 % and sets the opening degree of the flow control valve provided in the second duct 24 to 0 %. As a result, the airflow cooled by the heat exchanger 12 is restricted from reaching the condenser 42 (that is, from being supplied to the separation unit 23). Therefore, it is possible to prevent a decrease in the efficiency of carbon dioxide recovery due to a decrease in the temperature of the air supplied to the separation unit 23. In this case, the second blower 31 may blow air toward the condenser 42 (that is, the separation unit 23).

The control of the flow passage opening rate by the control unit 32 is not limited thereto, and the flow passage opening rate may be optionally changed according to seasonal conditions.

For example, the control unit 32 may control the restricting unit 35 such that the flow passage opening rate of the first duct 22 is 0 % and the flow passage opening rate of the second duct 24 is 100 % even in a case where the first heat pump device performs the heating operation. Even in this case, the airflow cooled by the heat exchanger 12 can be heated by the condenser 42 and supplied to the separation unit 23, so that the separation of carbon dioxide can be performed. In addition, since the air from the first blower 13 is dehumidified by passing through the heat exchanger 12, the temperature is easily increased by the condenser 42.

In addition, the control unit 32 can set the flow passage opening rates of the first duct 22 and the second duct 24 to any value between 0 % and 100 %.

As described above, in the present embodiment, the carbon dioxide recovery system 1 includes the second heat pump device 40 including the evaporator 41 and the condenser 42, the restricting unit 35 that is provided in the first duct 22 that conveys the airflow from the first blower 13 toward the evaporator 41 or in the second duct 24 that conveys the airflow from the first blower 13 toward the condenser 42 and that restricts at least a portion of the airflow generated by the first blower 13 from reaching the evaporator 41 or the condenser 42, and the control unit 32 that controls the flow passage opening rates of the first duct 22 and the second duct 24 by the restricting unit 35.

By controlling the flow passage opening rates of the first duct 22 and the second duct 24 by the restricting unit 35 according to the operation mode of the first heat pump device and the like, carbon dioxide can be more efficiently recovered.

### Seventh Embodiment.

Next, a carbon dioxide recovery system 1 according to a seventh embodiment will be described. Since a basic configuration of the carbon dioxide recovery system 1 according to the present embodiment is the same as that of the sixth embodiment, descriptions will focus on differences.

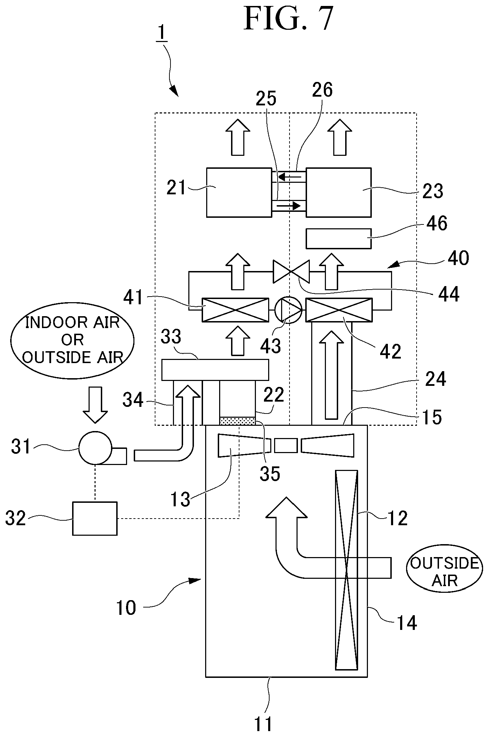

FIG. 7 is a schematic view of the carbon dioxide recovery system 1 according to the seventh embodiment.

As shown in FIG. 7, in the present embodiment, the carbon dioxide recovery system 1 further includes a heater 46.

The heater 46 is disposed between the condenser 42 and the separation unit 23. The heater 46 further heats the air that has been heated by passing through the condenser 42 and supplies the heated air to the separation unit 23. As a result, the efficiency of carbon dioxide recovery can be further improved.

### Eighth Embodiment.

Next, a carbon dioxide recovery system 1 according to an eighth embodiment will be described. Since a basic configuration of the carbon dioxide recovery system 1 according to the present embodiment is the same as that of the fifth embodiment, descriptions will focus on differences.

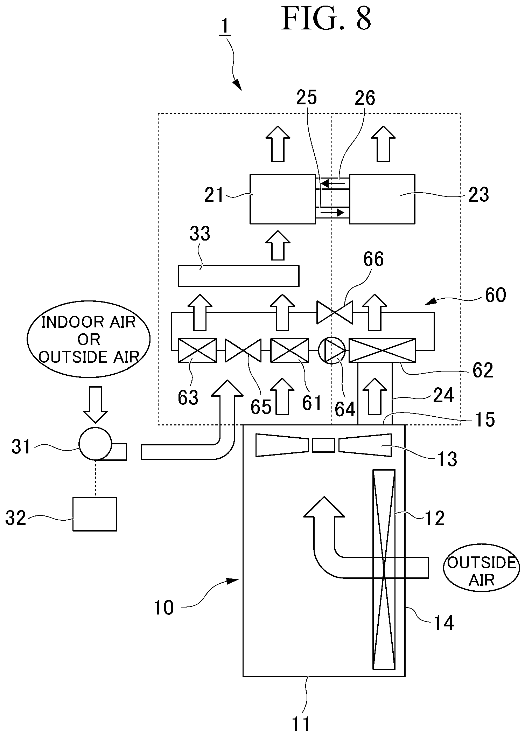

FIG. 8 is a schematic view of the carbon dioxide recovery system 1 according to the eighth embodiment.

As shown in FIG. 8, in the present embodiment, the carbon dioxide recovery system 1 includes a second heat pump device 60 instead of the second heat pump device 40.

The second heat pump device 60 is provided between the first blower 13, and the recovery unit 21 and the separation unit 23. The second heat pump device 60 includes an evaporator 61, a first condenser 62, a second condenser 63, a compressor 64, a first regulating valve 65, and a second regulating valve 66.

The evaporator 61 is located between the first blower 13 and the junction portion 33. The air from the first blower 13 and a portion of the air from the second blower 31 are cooled by passing through the evaporator 61 and are supplied to the junction portion 33.

The second condenser 63 is located between the first blower 13 and the junction portion 33. The air from the first blower 13 and another portion of the air from the second blower 31 are heated by passing through the second condenser 63 and are supplied to the junction portion 33.

The junction portion 33 is disposed between the second heat pump device 60 and the recovery unit 21. The junction portion 33 mixes the air cooled by the evaporator 61 with the air heated by the second condenser 63, and supplies the mixed air to the recovery unit 21.

The first condenser 62 is located between the first blower 13 and the separation unit 23. The air from the first blower 13 is heated by passing through the first condenser 62 and is supplied to the separation unit 23.

The first regulating valve 65 is located between the evaporator 61 and the second condenser 63. The first regulating valve 65 is an expansion valve that expands the refrigerant.

The second regulating valve 66 is located between the first condenser 62 and the second condenser 63. The second regulating valve 66 adjusts an amount of the refrigerant flowing through the first condenser 62 and the second condenser 63. The control unit 32 may control the second regulating valve 66 based on the measurement results of the temperature sensor provided in the junction portion 33.

As described above, the carbon dioxide recovery system 1 according to the embodiment includes the second heat pump device 60 including the evaporator 61, the first condenser 62, the second condenser 63, the first regulating valve 65 located between the evaporator 61 and the second condenser 63, and the second regulating valve 66 located between the first condenser 62 and the second condenser 63. The evaporator 61 and the second condenser 63 are located between the first blower 13 and the recovery unit 21, and the first condenser 62 is located between the first blower 13 and the separation unit 23.

By using the evaporator 61 and the second condenser 63, the temperature of the air supplied to the recovery unit 21 can be more accurately adjusted. Therefore, the efficiency of carbon dioxide recovery is further improved.

### Ninth Embodiment.

Next, a carbon dioxide recovery system 1 according to a ninth embodiment will be described. Since a basic configuration of the carbon dioxide recovery system 1 according to the present embodiment is the same as that of the eighth embodiment, descriptions will focus on differences.

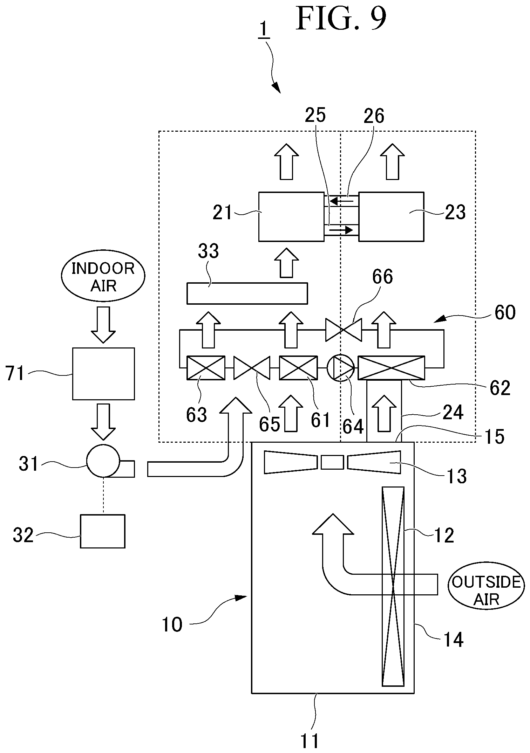

FIG. 9 is a schematic view of the carbon dioxide recovery system 1 according to the ninth embodiment.

As shown in FIG. 9, in the present embodiment, the carbon dioxide recovery system 1 further includes a total heat exchanger 71.

The total heat exchanger 71 is disposed upstream of the second blower 31. The second blower 31 supplies the indoor air that has passed through the total heat exchanger 71 to the recovery unit 21. As a result, exhaust heat of the indoor air is recovered by the total heat exchanger 71 and then supplied to the recovery unit 21. Therefore, it is possible to improve an energy efficiency of the entire system.

### Tenth Embodiment.

Next, a carbon dioxide recovery system 1 according to a tenth embodiment will be described. Since a basic configuration of the carbon dioxide recovery system 1 according to the present embodiment is the same as that of the ninth embodiment, descriptions will focus on differences.

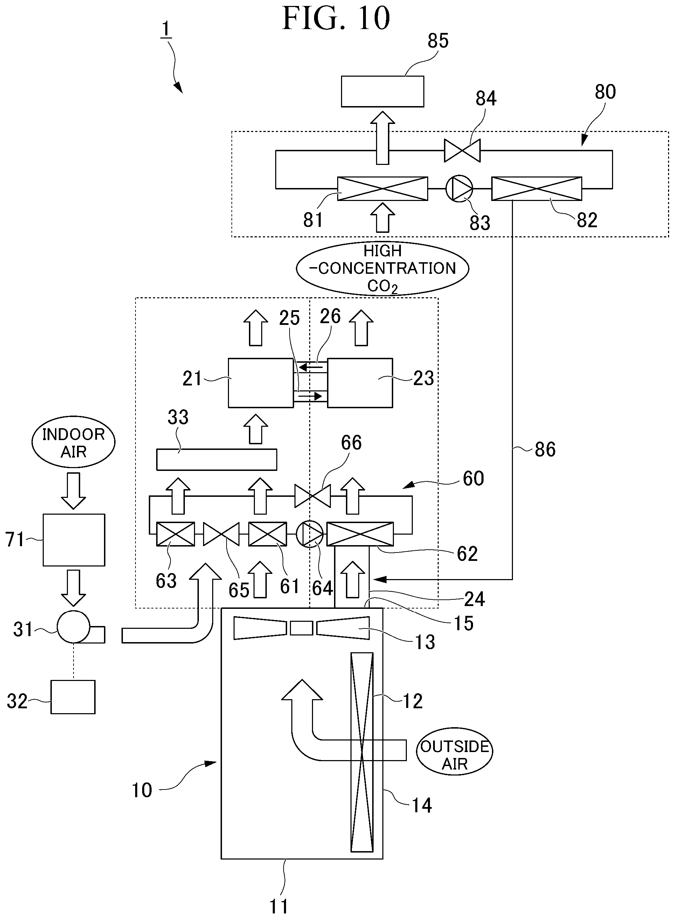

FIG. 10 is a schematic view of the carbon dioxide recovery system 1 according to the tenth embodiment.

As shown in FIG. 10, in the present embodiment, the carbon dioxide recovery system 1 further includes a third heat pump device 80, a carbon dioxide tank 85, and a first supply path 86.

The third heat pump device 80 is located downstream of the separation unit 23. The third heat pump device 80 includes an evaporator 81, a condenser (third condenser) 82, a compressor 83, and an expansion valve 84.

Gas discharged from the separation unit 23, containing a high concentration of carbon dioxide, is cooled by passing through the evaporator 81. As a result, the carbon dioxide is liquefied. The liquefied carbon dioxide is stored in the carbon dioxide tank 85.

The condenser 82 heats a surrounding fluid (for example, air or water). The first supply path 86 connects the condenser 82 to the second duct 24. The fluid heated in the condenser 82 is supplied to the separation unit 23 via the first supply path 86 and the second duct 24. The fluid heated in the condenser 82 may be directly supplied to the separation unit 23 via the first supply path 86.

As described above, the carbon dioxide recovery system 1 according to the present embodiment further includes the third heat pump device 80 that liquefies the carbon dioxide separated from the adsorbent in the separation unit 23.

As a result, the carbon dioxide separated in the separation unit 23 can be liquefied and stored in a low volume.

In addition, the carbon dioxide recovery system 1 according to the embodiment further includes the first supply path 86 that supplies the fluid heated in the condenser 82 of the third heat pump device 80 to the separation unit 23.

As a result, heat of the fluid heated in the condenser 82 can be used as a portion of the heat source for the separation of carbon dioxide. Therefore, the efficiency of carbon dioxide recovery can be further improved.

### Eleventh Embodiment.

Next, a carbon dioxide recovery system 1 according to an eleventh embodiment will be described. Since a basic configuration of the carbon dioxide recovery system 1 according to the present embodiment is the same as that of the tenth embodiment, descriptions will focus on differences.

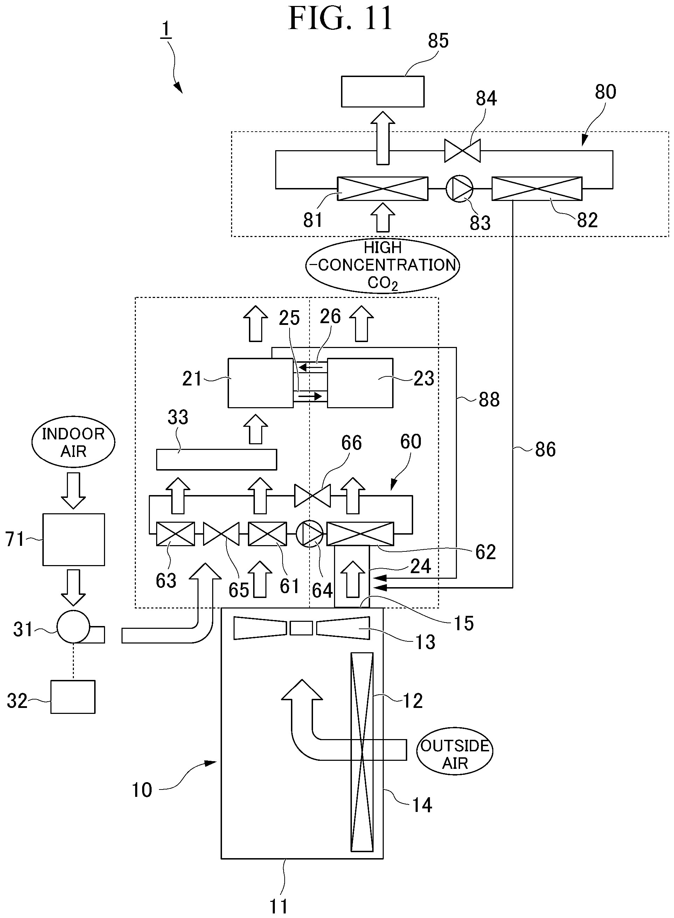

FIG. 11 is a schematic view of the carbon dioxide recovery system 1 according to the eleventh embodiment.

As shown in FIG. 11, in the present embodiment, the carbon dioxide recovery system 1 further includes a second supply path 88.

Gas after the carbon dioxide is recovered is discharged from the recovery unit 21. The second supply path 88 connects the recovery unit 21 to the second duct 24. The gas discharged from the recovery unit 21 is supplied to the separation unit 23 via the second supply path 88 and the second duct 24. The gas discharged from the recovery unit 21 may be directly supplied to the separation unit 23 via the second supply path 88.

As described above, the carbon dioxide recovery system 1 according to the present embodiment further includes the second supply path 88 that supplies the gas discharged from the recovery unit 21 to the separation unit 23.

In the recovery unit 21, when the adsorbent adsorbs carbon dioxide, adsorption heat is generated. By supplying the gas discharged from the recovery unit 21 to the separation unit 23, the adsorption heat can be used as a portion of the heat source for the separation of carbon dioxide. Therefore, the efficiency of carbon dioxide recovery can be further improved.

### Twelfth Embodiment.

Hereinafter, a carbon dioxide recovery system 1 according to a twelfth embodiment will be described. Since a basic configuration of the carbon dioxide recovery system 1 according to the present embodiment is the same as that of the tenth embodiment, descriptions will focus on differences.

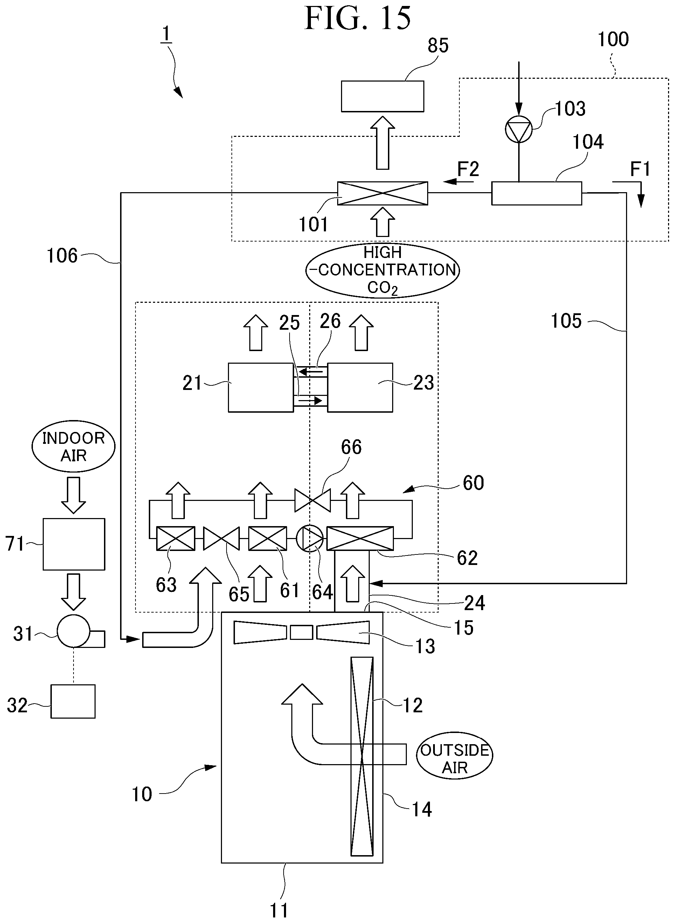

FIG. 15 is a schematic view of the carbon dioxide recovery system 1 according to the twelfth embodiment.

As shown in FIG. 15, in the present embodiment, the carbon dioxide recovery system 1 includes a liquefaction system 100 instead of the third heat pump device 80.

The liquefaction system 100 includes a liquefaction heat exchanger 101, a compressor 103, and a vortex tube 104. The liquefaction system 100 uses cold energy generated by the vortex tube 104 to liquefy the carbon dioxide separated from the adsorbent in the separation unit 23. The liquefaction system 100 need only include at least one liquefaction heat exchanger 101, and may include a plurality of the liquefaction heat exchangers 101.

The compressor 103 supplies compressed gas obtained by compressing air, dry air, or the like to the vortex tube 104.

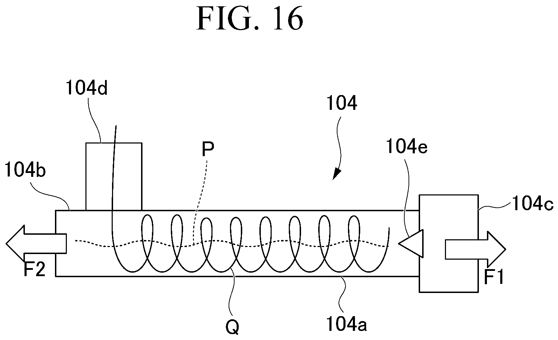

FIG. 16 is a schematic view of the vortex tube 104.

As shown in FIG. 16, the vortex tube 104 includes a main body portion 104a, a cold air outlet 104b, a warm air outlet 104c, a compressed gas supply port 104d, and a valve 104e.

The main body portion 104a has a cylindrical shape extending in a longitudinal direction. The cold air outlet 104b is provided at one end of the main body portion 104a in the longitudinal direction. The warm air outlet 104c is provided at the other end of the main body portion 104a in the longitudinal direction.

The compressed gas supply port 104d is provided at a side surface of the main body portion 104a. The compressed gas supply port 104d is provided close to the cold air outlet 104b. The compressed gas is supplied to the compressed gas supply port 104d from the compressor 103. The compressed gas is introduced into an inside of the main body portion 104a from the compressed gas supply port 104d. The compressed gas supply port 104d is configured such that the compressed gas introduced from the compressed gas supply port 104d to the inside of the main body portion 104a forms a swirling flow along an inner peripheral surface of the main body portion 104a.

The valve 104e is provided inside the main body portion 104a. The valve 104e is provided close to the warm air outlet 104c. The valve 104e narrows a flow passage area of the swirling flow compared to a cross sectional area of the main body portion 104a. The valve 104e allows a portion of the gas forming the swirling flow to be discharged from the warm air outlet 104c and prevents the discharge of the remaining gas.

An operation of the vortex tube 104 will be described.

First, the compressed gas is introduced from the compressor 103 into the compressed gas supply port 104d. The compressed gas forms an outer swirling flow Q along the inner peripheral surface of the main body portion 104a. This gas flows toward the warm air outlet 104c (valve 104e) while being pressed against the inner peripheral surface of the main body portion 104a. A temperature of the gas increases as the gas flows toward the warm air outlet 104c. In addition, due to a centrifugal force of the swirl, a pressure near the inner peripheral surface of the main body portion 104a is higher than a pressure at a center portion of the main body portion 104a. Due to this pressure difference, the temperature of the gas flowing near the inner peripheral surface of the main body portion 104a is higher than a temperature of the gas flowing through the center portion of the main body portion 104a.

When the gas that forms the outer swirling flow Q reaches the valve 104e, a portion of the gas that flows near the inner peripheral surface of the main body portion 104a and has reached a high temperature passes through a gap between the valve 104e and the inner peripheral surface of the main body portion 104a, and is discharged from the warm air outlet 104c as a high-temperature first fluid F1. On the other hand, the gas flowing through the center portion of the main body portion 104a is prevented from being discharged by the valve 104e and moves toward the cold air outlet 104b on the opposite side. The gas flows toward the cold air outlet 104b while forming an inner swirling flow P at the center portion of the main body portion 104a. The temperature of the gas decreases toward the cold air outlet 104b. The gas that has flowed through the center portion of the main body portion 104a and has reached a low temperature is discharged from the cold air outlet 104b as a low-temperature second fluid F2.

When a temperature of the compressed gas supplied from the compressed gas supply port 104d is denoted by T1, a temperature of the first fluid F1 discharged from the warm air outlet 104c is denoted by T2, and a temperature of the second fluid F2 discharged from the cold air outlet 104b is denoted by T3, T2 > T1 > T3.

That is, the vortex tube 104 rotates the compressed gas introduced from the compressor 103 inside the main body portion 104a at a high speed, and uses the swirling flows generated by the high-speed rotation and a pressure difference due to compression and expansion of the gas to separate the compressed gas into the high-temperature first fluid F1 (warm air) and the low-temperature second fluid F2 (cold air). By using the vortex tube 104, cold energy can be generated with a simple configuration. The temperature, the heat value, and the like of the cold energy can be adjusted, for example, by the pressure, the temperature, and the flow rate of the compressed gas supplied to the vortex tube 104, the flow rates of the first fluid F1 and the second fluid F2, and the like. The flow rates of the first fluid F1 and the second fluid F2 can be adjusted by the valve 104e.

The second fluid F2 discharged from the cold air outlet 104b is supplied to the liquefaction heat exchanger 101. The liquefaction heat exchanger 101 causes heat exchange between the second fluid F2 and the carbon dioxide separated from the adsorbent in the separation unit 23, thereby cooling and liquefying carbon dioxide. The liquefied carbon dioxide is stored in the carbon dioxide tank 85.

As shown in FIG. 15, the first fluid F1 discharged from the warm air outlet 104c may be supplied to the separation unit 23 via a third supply path 105. In this case, heat of the high-temperature first fluid F1 can be used as a portion of the heat source for the separation of carbon dioxide.

In addition, the second fluid F2 after the heat exchange in the liquefaction heat exchanger 101 may be supplied to the recovery unit 21 via a fourth supply path 106. In this case, energy of the compressed gas introduced into the vortex tube 104 can be reused as power for supplying air to the recovery unit 21.

The first fluid F1 may not be supplied to the separation unit 23. The second fluid F2 may not be supplied to the recovery unit 21.

As described above, the carbon dioxide recovery system 1 according to the present embodiment further includes the vortex tube 104 that separates the compressed air into the first fluid F1 and the second fluid F2 having a lower temperature than the first fluid F1, and discharges the first fluid F1 and the second fluid F2 separately, and the liquefaction heat exchanger 101 that causes the heat exchange between the second fluid F2 and the carbon dioxide separated from the adsorbent in the separation unit 23, thereby liquefying the carbon dioxide.

As a result, the carbon dioxide separated in the separation unit 23 can be liquefied and stored in a low volume. In addition, carbon dioxide can be liquefied with a simple configuration.

In addition, the carbon dioxide recovery system 1 further includes the third supply path 105 that supplies the first fluid F1 discharged from the vortex tube 104 to the separation unit 23.

As a result, the heat of the high-temperature first fluid F1 can be used as a portion of the heat source for the separation of carbon dioxide. Therefore, the efficiency of carbon dioxide recovery can be further improved.

However, the technical scope of the present invention is not limited to the above embodiments, and various modifications can be made without departing from the gist of the present invention.

For example, in the fifth embodiment, the junction portion 33 is disposed upstream of the evaporator 41, but the present invention is not limited thereto. The junction portion 33 may be disposed downstream of the evaporator 41.

In the eighth embodiment, one evaporator 61 and one second condenser 63 are provided between the first blower 13 and the recovery unit 21, but the present invention is not limited thereto. Two or more evaporators may be provided between the first blower 13 and the recovery unit 21, and two or more condensers may be provided between the first blower 13 and the recovery unit 21.

In the eighth embodiment, the second condenser 63 may be located between the evaporator 61 and the recovery unit 21. In this case, the air dehumidified by the evaporator 61 is heated by the second condenser 63 and supplied to the recovery unit 21.

In addition, the above-described embodiments or modification examples may be combined as appropriate.

For example, the total heat exchanger 71 of the ninth embodiment may be provided in the carbon dioxide recovery system 1 of the first to eighth embodiments.

The third heat pump device 80 and the first supply path 86 of the tenth embodiment may be provided in the carbon dioxide recovery system 1 of the first to eighth embodiments.

The second supply path 88 of the eleventh embodiment may be provided in the carbon dioxide recovery system 1 of the first to ninth embodiments.

The liquefaction system 100 according to the twelfth embodiment may be provided in the carbon dioxide recovery system 1 according to the first to ninth embodiments.

It should be noted that the aforementioned control unit 32 includes a computer system therein. A program for implementing functions of each configuration provided by the carbon dioxide recovery system 1 described above may be recorded on a computer-readable recording medium, and by having the computer system read and execute the program recorded on this recording medium, processing in the control unit 32 described above may be performed. In addition, hardware other than the control unit 32 may perform the above-described processing.

Here, "having the computer system read and execute the program recorded on the recording medium" includes installing the program on the computer system. Here, the "computer system" mentioned here includes an operating system (OS) and hardware such as a peripheral device.

In addition, the "computer system" may include a plurality of computer devices connected via a network including a communication line such as the Internet, a WAN, a LAN, and a dedicated line. In addition, the "computer-readable recording medium" refers to a portable medium such as a flexible disk, a magneto-optical disk, a ROM, or a CD-ROM, and a storage device such as a hard disk built in a computer system. As described above, the recording medium on which the program is stored may be a non-transitory recording medium such as a CD-ROM.

In addition, the recording medium also includes an internal or external recording medium that is accessible by a distribution server to distribute the program. In addition, a configuration may be adopted in which the program is divided into a plurality of programs and the plurality of programs are downloaded at different times and then combined in each configuration provided by the carbon dioxide recovery system 1, or the distribution server that distributes each of the divided programs may be different. Furthermore, the "computer-readable recording medium" also includes a medium that holds the program for a certain period of time, such as a volatile memory (RAM) inside the computer system that serves as a server or a client in a case where the program is transmitted via a network. In addition, the program may be a program for implementing some of the functions described above. Furthermore, the program may be a so-called difference file (difference program) capable of implementing the functions described above in combination with a program that has already been recorded on the computer system.

### List of Reference Signs

- 1:: Carbon dioxide recovery system
- 10:: Outdoor unit
- 12:: Heat exchanger
- 13:: First blower
- 21:: Recovery unit
- 22:: First duct
- 23:: Separation unit
- 24:: Second duct
- 31:: Second blower
- 32:: Control unit
- 35:: Restricting unit
- 40, 60:: Second heat pump device
- 41, 61:: Evaporator
- 42:: Condenser
- 46:: Heater
- 62:: First condenser
- 63:: Second condenser
- 65:: First regulating valve
- 66:: Second regulating valve
- 71:: Total heat exchanger
- 80:: Third heat pump device
- 82:: Condenser (third condenser)
- 86:: First supply path
- 88:: Second supply path
- 100:: Liquefaction system
- 101:: Liquefaction heat exchanger
- 104:: Vortex tube
- 105:: Third supply path

## Claims

1. A carbon dioxide recovery system comprising:
an outdoor unit of a first heat pump device, the outdoor unit including a heat exchanger and a first blower;
a recovery unit that has an adsorbent onto which carbon dioxide is adsorbable and is configured to recover carbon dioxide from air; and
a separation unit configured to separate the carbon dioxide from the adsorbent moved from the recovery unit,
wherein the first blower sends out an airflow heated by the heat exchanger toward the separation unit in a case where the first heat pump device performs a cooling operation.

2. The carbon dioxide recovery system according to Claim 1,
wherein the first blower sends out the airflow that has passed through the heat exchanger toward both the recovery unit and the separation unit.

3. The carbon dioxide recovery system according to Claim 1 or 2, further comprising:
a second blower configured to supply an outside air or indoor air that has not passed through the heat exchanger to the recovery unit.

4. The carbon dioxide recovery system according to Claim 3, further comprising:
a restricting unit that is provided between the first blower and the recovery unit and is configured to restrict the airflow heated by the heat exchanger from reaching the recovery unit.

5. The carbon dioxide recovery system according to any one of Claims 1 to 4, further comprising:
a second heat pump device including an evaporator and a condenser,
wherein the evaporator is located between the first blower and the recovery unit,
and the condenser is located between the first blower and the separation unit.

6. The carbon dioxide recovery system according to Claim 3, further comprising:
a second heat pump device including an evaporator and a condenser,
wherein the evaporator is located between the first blower and the recovery unit,
the condenser is located between the first blower and the separation unit, and
the second blower supplies the outside air or indoor air that has not passed through the heat exchanger to the recovery unit by passing the outside air or
indoor air through the evaporator.

7. The carbon dioxide recovery system according to Claim 6, further comprising:
a restricting unit configured to restrict the airflow heated by the heat exchanger from reaching the evaporator in a case where the first heat pump device performs a cooling operation.

8. The carbon dioxide recovery system according to any one of Claims 5 to 7, further comprising:
a heater that is disposed between the condenser and the separation unit.

9. The carbon dioxide recovery system according to any one of Claims 5 to 8,
wherein the second heat pump device operates in a transcritical heat pump cycle in which a refrigerant operates at a pressure higher than a critical pressure. ]

10. The carbon dioxide recovery system according to Claim 9,
wherein the second heat pump device uses a refrigerant primarily containing carbon dioxide as a working fluid.

11. The carbon dioxide recovery system according to any one of Claims 5 to 10, wherein the second heat pump device uses a non-azeotropic mixed refrigerant as a working fluid.

12. The carbon dioxide recovery system according to any one of Claims 5 to 11, wherein, in a case where the first heat pump device performs a heating operation, the first blower supplies an airflow cooled by the heat exchanger to the recovery unit by passing the airflow through the evaporator and supplies the airflow cooled by the heat exchanger to the separation unit by passing the airflow through the condenser.

13. The carbon dioxide recovery system according to Claim 12, further comprising:
a second blower configured to supply an outside air or indoor air that has not passed through the heat exchanger to the recovery unit, wherein, in a case where the first heat pump device performs a heating operation, the airflow by the first blower is mixed with the outside air or indoor air sent out by the second blower to be increased in temperature and is supplied to the recovery unit.

14. The carbon dioxide recovery system according to any one of Claims 5 to 11, further comprising:
a restricting unit that is provided in a first duct that conveys the airflow from the first blower toward the evaporator or in a second duct that conveys the airflow from the first blower toward the condenser, and is configured to restrict at least a portion of the airflow generated by the first blower from reaching the evaporator or the condenser; and
a control unit configured to control flow passage opening rates of the first duct and the second duct by the restricting unit.

15. The carbon dioxide recovery system according to any one of Claims 1 to 4, further comprising:
a second heat pump device including an evaporator, a first condenser, a second condenser, a first regulating valve located between the evaporator and the second condenser, and a second regulating valve located between the first condenser and the second condenser,
wherein the evaporator and the second condenser are located between the first blower and the recovery unit, and
the first condenser is located between the first blower and the separation unit.

16. The carbon dioxide recovery system according to any one of Claims 1 to 15, further comprising:
a total heat exchanger; and
a second blower configured to supply an indoor air that has passed through the total heat exchanger to the recovery unit.

17. The carbon dioxide recovery system according to any one of Claims 1 to 16, further comprising:
a third heat pump device configured to liquefy the carbon dioxide separated from the adsorbent in the separation unit.

18. The carbon dioxide recovery system according to Claim 17, further comprising:
a first supply path configured to supply a fluid heated in a third condenser of the third heat pump device to the separation unit.

19. The carbon dioxide recovery system according to any one of Claims 1 to 18, further comprising:
a second supply path configured to supply gas discharged from the recovery unit to the separation unit.

20. The carbon dioxide recovery system according to any one of Claims 1 to 16, further comprising:
a vortex tube configured to separate compressed air into a first fluid and a second fluid having a lower temperature than the first fluid, and to separately discharge the first fluid and the second fluid; and
a liquefaction heat exchanger configured to cause heat exchange between the second fluid and the carbon dioxide separated from the adsorbent in the separation unit, thereby liquefying the carbon dioxide.

21. The carbon dioxide recovery system according to Claim 20, further comprising:
a third supply path configured to supply the first fluid discharged from the vortex tube to the separation unit.
